# EUROPEAN PATENT APPLICATION

(11) **EP 4 769 284 A1**
(43) Date of publication of application: **01.07.2026**
(21) Application number: 25225537.7
(22) Date of filing: 19.12.2025
(51) Int. Cl.: G06Q 30/0601

(54) **ENHANCING ITEM RETRIEVAL USING FITMENT MATCH**

(30) Priority: 30.12.2024 US 202419005236
(71) Applicant: eBay Inc., San Jose, CA 95125 (US)
(72) Inventor: MULTANI, Sarabdeep Singh, SAN JOSE, 95125 (US); DANAVANDI, Suhas Giridhar, SAN JOSE, 95125 (US); REKABU, Prathihasth, SAN JOSE, 95125 (US); DUBEY, Saurabh, SAN JOSE, 95125 (US); PATIL, Sankalp Arun, SAN JOSE, 95125 (US)
(74) Representative: Müller-Boré & Partner Patentanwälte PartG mbB

(57) **Abstract**

Some aspects relate to technologies for performing item retrieval on a listing platform using clusters of interchangeable parts formed using fitment match. In accordance with some aspects, item data is accessed for part item listings on a listing platform, where the item data for each part item listing includes fitment data for each of a number of different fitments. For each part item listing, a fitment hash is generated using fitment data for each fitment of the part item listing. The part item listings are clustered based on overlap of fitment hashes for the part item listings. Cluster data is stored for the part item listing clusters. The cluster data for each part item listing cluster associates a cluster identifier and an item listing identifier for each part item listing in the part item listing cluster. The cluster data can be leveraged to perform item retrieval for the listing platform.

## Description

### BACKGROUND

Listing platforms, such as e-commerce websites, are online platforms that offer products, services, digital content (e.g., music, videos, etc.), or other items to users. Such platforms typically offer a vast number of items. While some items are relevant to any given user, the majority is not. As a result, item retrieval for listing platforms is a particular Internet-centric problem that has proven to be difficult to fully address. That is, given a large number of items available on a listing platform, what items should be retrieved and presented to a user and in what order.

Given the vast number of items available, listing platforms include functionality, such as search and recommendation, to assist users in finding items of interest on the platforms. For instance, listing platforms often provide search capabilities that receive user queries and return search results identifying items relevant to the user queries. Listing platforms also often leverage recommendation systems to recommend items that are likely of interest to users based on a variety of information, such as an item currently being viewed by a user, user attributes, and user behavior on the listing platforms (e.g., previous item views, purchases, etc.). Some categories of items, such as automobile parts, present a particular challenge for item retrieval given the vast number of parts and the compatibility of the parts with different automobiles.

### SUMMARY

Some aspects of the present technology relate to, among other things, performing item retrieval on a listing platform using clusters of interchangeable parts formed based on fitment match representing the extent of overlap of fitments between part item listings. In accordance with some aspects, item data is accessed for part item listings available on a listing platform. The item data for each part item listing includes fitment data for each fitment of the part item listing. A fitment is an application with which a part item is compatible (e.g., an automobile for an automobile part), and the fitment data for a fitment is information that identifies the application (e.g., year/make/model of an automobile). A part item listing can have fitment data for any number of fitments.

For each part item listing, a fitment hash is generated from fitment data for each fitment. This provides a set of fitment hashes for each part item listing. The part item listings are then clustered based on fitment match using the fitment hashes. A fitment match represents an extent of overlap of fitment hashes between part item listings. In some aspects, an exact fitment match (i.e., 100% overlap) is used to cluster part item listings; while in other aspects, a fitment match threshold (e.g., 80% overlap) is used to cluster part item listings. In some configurations, additional data, such as category identify and/or price data, is also used to cluster part item listings to prevent different types of part item having the same fitments from being clustered together since they provide different functions and are not interchangeable.

Cluster data is stored that identifies part item listings clustered together. When input is received for an item retrieval task (e.g., a search query in the context of search or a seed item in the context of recommendation), the cluster data is used to identify a cluster relevant to the input. A response to the input is returned that identifies part item listings from the identified cluster (e.g., search results or recommendations that include part item listings from the cluster).

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

### BRIEF DESCRIPTION OF THE DRAWINGS

The present technology is described in detail below with reference to the attached drawing figures, wherein:
FIG. 1 is a block diagram illustrating an exemplary system in accordance with some implementations of the present disclosure;
FIG. 2 is a diagram showing generation of part item listing clusters based on fitment match between part item listings in accordance with some implementations of the present disclosure;
FIG. 3 is a diagram showing an example of using price data in addition to fitment match for forming part item listing clusters in accordance with some implementations of the present disclosure;
FIG. 4 is a block diagram showing operations to generate part item listing clusters based on fitment match and employing the clusters for item retrieval in accordance with some implementations of the present disclosure;
FIG. 5 is a flow diagram showing a method for generating clusters of part item listings based on fitment match and storing cluster data in accordance with some implementations of the present disclosure;
FIG. 6 is a flow diagram showing a method for performing item retrieval using cluster data generated based on fitment match in accordance with some implementations of the present disclosure; and
FIG. 7 is a block diagram of an exemplary computing environment suitable for use in implementations of the present disclosure.

### DETAILED DESCRIPTION

### Overview

Many listing platforms (e.g., e-commerce websites) offer a large number of item listings and also serve a large number of visitors. For instance, it has been reported that as of 2023, the eBay listing platform has 1.7 billion item listings, and the monthly number of visits to eBay websites reached almost 3 billion. Each user visit to the website of a listing platform by a user involves servers of the listing platform processing user inputs and providing, over a network, digital content to a user device of the user as the user navigates the website. This can include, for instance, providing search result pages in response to search input, browse node pages in response to users browsing the website or navigation from external sources, and item pages when users select to view information for particular item listings.

Given the vast number of available item listings and user visits, listing platforms require significant server resources to ensure smooth performance and quick load times, even during peak traffic periods, as well as advanced database management systems to efficiently organize and retrieve item listing information. As a result, listing platforms demand extensive server processing and storage resources to handle the dynamic and high-demand environment effectively. Many listing platform providers attempt to design their server systems to provide relevant item listings to users as quickly and efficiently as possible in order to reduce the computing resource consumption required for the user visits. For instance, if the search system of the listing platform is ineffective in returning relevant search results, users will submit additional search queries until relevant search results are returned. These repetitive search queries can exponentially increase the computer resource consumption of the listing platform (e.g., increased bandwidth, memory, and CPU usage). Additionally, users often repeatedly select to view item pages for different item listings until they find relevant items. This requires the servers of the listing platform to repeatedly retrieve data from storage and provide the item pages to the user devices, also increasing computer resource consumption.

One area that presents a particular challenge for listing platforms is dealing with item listings for parts (sometimes referred to as part item listings). Parts are items specifically designed to be compatible with certain applications, ensuring they fit and function correctly within a larger system. For example, an ink cartridge is a part that must be compatible with a particular model of printer (i.e., the application) to ensure proper printing performance. The term "part" is used herein to refer to any item that involves compatibility, including required parts and optional accessories. The compatibility requirement for parts presents a significant challenge for listing platforms, as parts must be matched with the correct applications. This increases the difficulty in surfacing relevant items.

Interchangeable parts are defined as parts that fit the same set of applications and that have the same function in the application. For instance, in the context of automobiles, interchangeable automobile parts are parts that fit the same set of automobiles and that have the same function in the automobiles. The ability of item retrieval systems to identify and return item listings for interchangeable parts on listing platforms is a technically challenging problem for various reasons. First, interchangeable parts can be produced by different manufacturers, so they are characterized by different part numbers (e.g., manufacturer part numbers (MPNs), serial numbers, etc.). Second, coverage of part numbers on item listings is low for some listing platforms as item listings for parts on the listing platforms may not include part numbers as a result of the sellers not being aware of the correct part numbers. Third, there are some alternative identifiers, such as interchange numbers in the context of automobiles, generated by catalog producers to address this issue, but these are not widely used/known and their coverage on some listings platforms is also often generally low.

While item retrieval systems are useful tools for locating items on listing platforms, current search and recommendation technologies present shortcomings in their ability to identify and return interchangeable parts. Among other things, the absence of part numbers (e.g., MPNs, serial numbers, interchange numbers, etc.) on some item listings and the missing association between different part numbers from different manufacturers presents a technical challenge to item retrieval systems that adversely impacts their ability to surface interchangeable parts. These shortcomings in existing search and recommendation technologies used by conventional item retrieval systems often result in the consumption of an unnecessary quantity of computing resources (e.g., I/O costs, network packet generation costs, throughput, memory consumption, etc.). For instance, search systems for listing platforms sometimes receive search queries that include just an MPN. In those cases, current search systems can generally only identify item listings with that specific MPN, while missing item listings for compatible parts that do not include an MPN or that use a different MPN. This can result in low or even null results in some cases. The low and null results often require users to submit multiple queries before finding relevant item listings.

On the other end of the spectrum, in some cases of keyword or natural language queries, conventional search systems for listing platforms often return a large number of incompatible parts, which typically requires users to submit multiple queries to refine the search results find the relevant parts. For example, a user may issue a first query to a search engine of a listing platform that returns a set of search results. The user may browse the search results and select certain search results to access the corresponding item listings. Selection of search results causes retrieval of the corresponding item listings. Additionally, in some cases, applications are launched in order to render data associated with the item listings. When the search results do not return the appropriate part items, the user typically enters subsequent queries until item listings for relevant part items are found.

In the context of recommendation, when recommended item listings are insufficient (not true interchangeable parts), users may select to view certain item listings and discover the listings are not what the user is seeking. This often results in the users turning to query-based searching, which can involve issuing numerous queries in an attempt to identify relevant item listings as discussed above.

These repetitive inputs in conventional item retrieval systems for listing platforms result in increased computing resource consumption, among other things. For instance, repetitive user queries result in packet generation costs that adversely affect computer network communications. Each time a user issues a query, the contents or payload of the query is typically supplemented with header information or other metadata within a packet in TCP/IP and other protocols. Accordingly, when this functionality is multiplied by all the inputs needed to obtain the desired data, there are throughput and latency costs by repetitively generating this metadata and sending it over a computer network. In some instances, these repetitive inputs (e.g., repetitive clicks, selections, or queries) increase storage device I/O (e.g., excess physical read/write head movements on non-volatile disk) because each time a user inputs unnecessary information, such as inputting several queries, the computing system often has to reach out to the storage device to perform a read or write operation, which is time consuming, error prone, and can eventually wear on components, such as a read/write head. Further, if users repetitively issue queries, it is expensive because processing queries consumes a lot of computing resources. For example, for some item retrieval systems, a query execution plan may need to be calculated each time a query is issued, which could require a system to find the least expensive query execution plan to fully execute the query. This decreases throughput and increases network latency, and can waste valuable time.

Aspects of the technology described herein improve the functioning of server systems for listing platforms by providing improved item retrieval of part item listings for interchangeable parts. In accordance with the technology described herein, part item listings are clustered based on fitment match, which represents an extent to which the fitments of part item listings overlap. Part item listings clustered together in this manner can be considered as interchangeable parts for item retrieval tasks.

In accordance with some aspects, item data is accessed for part item listings that offer part items on a listing platform. The item data for each part item listing includes fitment data for each fitment of the part item listing. A fitment represents an application with which the part item of the part item listing is compatible. A particular part item can have any number of fitments. For instance, in the case of a part item listing for an automobile part, the accessed item data can include fitment data for each automobile (i.e., fitment) with which that automobile part is compatible. The fitment data for a fitment can be any information that identifies the specific application (e.g., year, make, model, trim, and/or engine for an automobile; or brand and model number of a printer).

A fitment hash is generated for each fitment of each part item listing. Each fitment hash is generated from fitment data for a given fitment. As such, a set of fitment hashes for each part item listing comprises a fitment hash for each fitment of the part item listing. For instance, in the case of an automobile part, a fitment hash could be generated from the year/make/model of each automobile identified in the item data for the part item listing. In some aspects, fitment hashes are generated using additional data with the fitment data for a fitment. For instance, the additional data can include a category identifier, price data, and/or inventory segment identifier for the part item listing.

The part item listings are clustered based on fitment match using the fitment hashes. Fitment match represents an overlap of fitment hashes between part item listings. In some configurations, an exact fitment match is used to form clusters in which each part item listing in each cluster has a complete overlap of fitment hashes with each other part item listing in the cluster. In some configuration, fitment match is based on a threshold match threshold that defines a threshold overlap of fitment hashes between part item listings in each cluster (e.g., 80% overlap of fitment hashes). In some aspects, additional data can be used in conjunction with fitment hashes to cluster the part item listings. The additional data can be used as additional constraints (e.g., positive or negative constraints) when clustering. In some cases, the additional data helps identify situations in which item listings for different types of part items have the exact or threshold level of fitment match even though the part items are not interchangeable as they serve different functions. For instance, category identifiers and/or price data can be used to further segment part item listings into clusters of interchangeable parts.

Cluster data is stored that identifies part item listings that have been clustered together and therefore can be treated as interchangeable parts. For instance, the cluster data can include a cluster identifier assigned to each cluster and item listing identifiers for each part item listing in each cluster. In some aspects, the cluster data can associate cluster identifiers with part numbers (e.g., MPNs) of part item listings in each cluster.

To perform item retrieval using the cluster data, when an input is received, the cluster data is used to identify a cluster for the input. The input could be, for instance, a search query in the context of search, or one or more seed items in the context of recommendation. For example, a search query could be received that includes a part number (e.g., MPN), and a cluster having part item listings with that part number could be identified. In the case of a keyword-based search query, initial search results could be identified based on the keywords in the search query, and a relevant cluster could be identified based on those initial search results. In the context of recommendation, given a seed item, the cluster to which that seed item belongs could be identified.

After identifying a cluster for the input, one or more part item listings from the cluster are returned in response to the input. In the context of search, this could include providing search results based on part item listings in the identified cluster. In the context of recommendation, this could include providing recommendations for part item listings in the identified cluster.

Aspects of the technology described herein provide a number of improvements over existing item retrieval technologies for listing platforms. For example, clustering of part item listings based on fitment match provides a powerful way for item retrieval systems to identify interchangeable parts among the large number of item listings on the listing platform. Generating fitment hashes from fitment data for each fitment provides an efficient way to compare overlap (e.g., one-to-one correspondence) of fitments between part item listings. This overlap of fitment hashes provides an indication of the extent of overlap of fitments between part item listings, which provides a signal for identifying whether the part item listings provide interchangeable parts. The use of additional data, such as category identifiers and price data, to perform clustering in conjunction with fitment hashes prevents the clustering of part item listings with a fitment match (exact or threshold) that are not interchangeable parts since they are different types of parts providing different functions.

The clustering of part item listings using aspects of the technology described herein enables the item retrieval system for the listing platform to accurately identify interchangeable parts, as opposed to conventional approaches that often result in low/null results or results with a large number of irrelevant search results. Moreover, the ability to change aspects, such as the fitment match threshold and aspects of price outlier detection, allows for configuring the system to avoid over-inclusivity and under-inclusivity in the clusters. As such, the clusters formed using the technology described herein improve the ability of the item retrieval system to return search results and provide recommendations for truly interchangeable parts. This improves both the precision and recall of interchangeable parts for the listing platform relative to conventional approaches.

Among other things, this provides for improved computing resource consumption for server systems of listing platforms to relative to existing item retrieval technologies. For instance, the ability of the item retrieval system to provide item listings for interchangeable parts using aspects of the technology described herein eliminates (or at least reduces) the repetitive user queries, search result selections, and rendering of item listings relative to conventional techniques because relevant item listings are provided without the need for users to continuously input various search queries to access search results and/or continuously make item selections to obtain further information around presented item listings. Accordingly, aspects of the technology described herein decrease computing resource consumption, such as packet generation costs. For instance, a user query (e.g., an HTTP request), would only need to traverse a computer network once (or fewer times relative to existing technologies). Specifically, the contents or payload of the user query is supplemented with header information or other metadata within a packet in TCP/IP and other protocols once for the initial user query. Such packet for a user query is only sent over the network once or fewer times. Thus, there is no repetitive generation of metadata and continuous sending of packets over a computer network.

In like manner, aspects of the technology described herein improve storage device or disk I/O and query execution functionality, as they only need to go out to disk a single time (or fewer times relative to existing item retrieval technologies). As described above, the inadequacy of existing search and recommendation technologies results in repetitive user queries, search result selections, and item listing renderings. This causes multiple traversals to disk. In contrast, aspects described herein reduce storage device I/O because the computing system receives fewer inputs and so the computing system does not have to reach out to the storage device as often to perform a read or write operation. Accordingly, there is not as much wear on components, such as a read/write head, because disk I/O is substantially reduced.

### Example System for Enhanced Item Retrieval based on Fitment Match

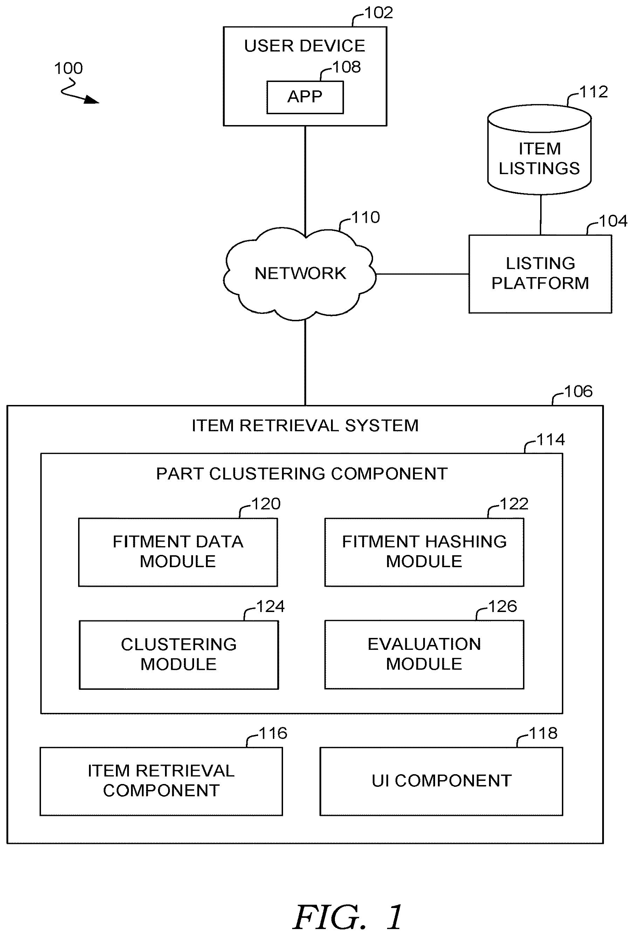

With reference now to the drawings, FIG. 1 is a block diagram illustrating an exemplary system 100 for performing item retrieval on a listing platform by forming clusters of interchangeable parts based on fitment match between part item listings in accordance with implementations of the present disclosure. It should be understood that this and other arrangements described herein are set forth only as examples. Other arrangements and elements (e.g., machines, interfaces, functions, orders, and groupings of functions, etc.) can be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, various functions may be carried out by a processor executing instructions stored in memory.

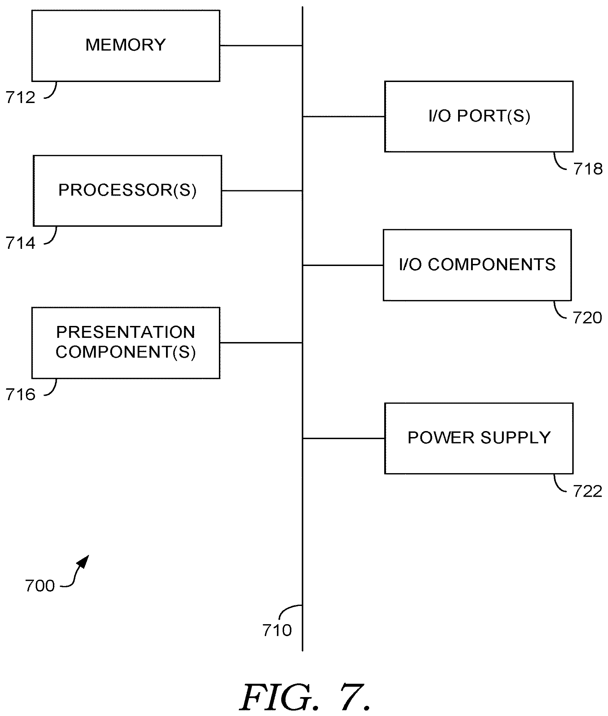

The system 100 is an example of a suitable architecture for implementing certain aspects of the present disclosure. Among other components not shown, the system 100 includes a user device 102, a listing platform 104, and an item retrieval system 106. Each of the user device 102, the listing platform 104, and the item retrieval system 106 shown in FIG. 1 can comprise one or more computer devices, such as the computing device 700 of FIG. 7, discussed below. As shown in FIG. 1, the user device 102, the listing platform 104, and the item retrieval system 106 can communicate via a network 110, which may include, without limitation, one or more local area networks (LANs) and/or wide area networks (WANs). Such networking environments are commonplace in offices, enterprise-wide computer networks, intranets, and the Internet. It should be understood that any number of user devices and servers may be employed within the system 100 within the scope of the present technology. Each may comprise a single device or multiple devices cooperating in a distributed environment. For instance, the listing platform 104 and the item retrieval system 106 could each be provided by multiple server devices collectively providing the functionality of the listing platform 104 and the item retrieval system 106 as described herein. Additionally, other components not shown may also be included within the network environment.

The user device 102 can be a client device on the client-side of the system 100, while the listing platform 104 and the item retrieval system 106 can be on the server-side of the system 100. The listing platform 104 and/or the item retrieval system 106 can each comprise server-side software designed to work in conjunction with client-side software on the user device 102 so as to implement any combination of the features and functionalities discussed in the present disclosure. For instance, the user device 102 can include an application 108 for interacting with the listing platform 104 and/or the item retrieval system 106. The application 108 can be, for instance, a web browser or a dedicated application for providing functions, such as those described herein. This division of the system 100 is provided to illustrate one example of a suitable environment, and there is no requirement for each implementation that any combination of the listing platform 104 and the item retrieval system 106 remain as separate entities. For instance, in some aspects, the item retrieval system 106 is a part of the listing platform 104. While the system 100 illustrates a configuration in a networked environment with a separate user device, listing platform, and item retrieval system, it should be understood that other configurations can be employed in which aspects of the various components are combined.

The user device 102 may comprise any type of computing device capable of use by a user. For example, in one aspect, a user device may be the type of computing device 700 described in relation to FIG. 7 herein. By way of example and not limitation, the user device 102 may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device. A user may be associated with the user device 102 and may interact with the listing platform 104 and/or the item retrieval system 106 via the user device 102.

The listing platform 104 can be implemented using one or more server devices, one or more platforms with corresponding application programming interfaces, cloud infrastructure, and the like. The listing platform 104 generally provides, to user devices such as the user device 102, item listings describing items (physical or digital) available for purchase, rent, streaming, download, etc. For instance, the listing platform 104 could comprise an e-commerce platform, in which listed products or services are available for purchase by users of the user device 102 upon navigation to the listing platform 104. In accordance with various aspects described herein, the item listings available on the listing platform 104 include item listings for part items - i.e., part item listings (e.g., part item listings for automobile parts compatible with certain automobiles).

The functionality of the listing platform 104 includes provision of interfaces enabling surfacing of item listings for items to users of the listing platform 104. Item data for item listings available via the listing platform 104 are stored by the item listings data store 112. The item data for each item listing may include, for instance, information relating to an item comprising one or more of: an item title, an item description, a category, a price in a currency, reviews, images of the item, shipment options, a rating, a condition of the item, a size of the item, a color of the item, etc. The item data can include structured data (attribute name-attribute value pairs) and unstructured text. The item data can further include search information, such as search queries for which an item listing was returned as a search result and/or resulted in some user action (e.g., click, purchase, etc.) The item data for part item listings also includes fitment data. Fitment data indicates compatibility of a part with an application (e.g., an automobile). For instance, in the case of an automobile fitment, the fitment data could include information identifying a compatible make, model, year, trim, and engine. The item data for part item listings can further include information identifying a brand and a part number (e.g., manufacturer part number (MPN), interchange part numbers, etc.). The item data for part item listings can also include an inventory segment identifier that indicates an inventory segment for part that generally identifies a source and/or condition of a part, such as a salvage part, original equipment part, an aftermarket part, or a private label part. In some aspects, each item listing is also associated with one or more categories from a category hierarchy for the listing platform (e.g., using category identifiers), including meta-categories and leaf categories. For example, the meta-categories are each divisible into subcategories (or branch categories), whereas leaf categories are not divisible.

The item retrieval system 106 facilitates item retrieval for the listing platform 104, including providing search and/or recommendation functions that return item listings to users. In accordance with aspects of the technology described herein, the item retrieval system 106 generates clusters of part item listings using fitment data and employs the clusters to facilitate providing interchangeable parts for item retrieval tasks.

As shown in FIG. 1, the item retrieval system 106 includes a part clustering component 114, an item retrieval component 116, and a user interface component 118. The components of the item retrieval system 106 may be in addition to other components that provide further additional functions beyond the features described herein. The item retrieval system 106 can be implemented using one or more server devices, one or more platforms with corresponding application programming interfaces, cloud infrastructure, and the like. While the item retrieval system 106 is shown separate from the listing platform 104 and the user device 102 in the configuration of FIG. 1, it should be understood that in other configurations, some of the functions of the item retrieval system 106 can be provided on the listing platform 104 and/or the user device 102. Additionally, while the components are shown as part of the item retrieval system 106, in other configurations, one or more of the components and/or modules thereof can be provided by the listing platform 104 or another location not shown in FIG. 1. The components can be provided by a single entity or multiple entities.

In some aspects, the functions performed by components of the item retrieval system 106 are associated with one or more applications, services, or routines. In particular, such applications, services, or routines may operate on one or more user devices, servers, may be distributed across one or more user devices and servers, or be implemented in the cloud. Moreover, in some aspects, these components of the item retrieval system 106 may be distributed across a network, including one or more servers and client devices, in the cloud, and/or may reside on a user device. Moreover, these components, functions performed by these components, or services carried out by these components may be implemented at appropriate abstraction layer(s) such as the operating system layer, application layer, hardware layer, etc., of the computing system(s). Alternatively, or in addition, the functionality of these components and/or the aspects of the technology described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Additionally, although functionality is described herein with regards to specific components shown in example system 100, it is contemplated that in some aspects, functionality of these components can be shared or distributed across other components.

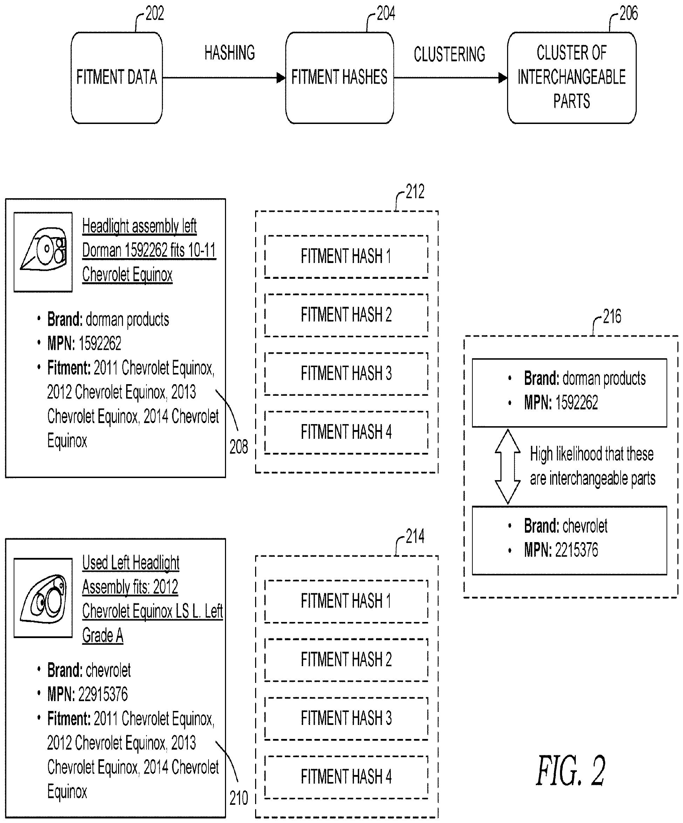

The part clustering component 114 of the item retrieval system 106 leverages fitment match to form clusters of part item listings, in which each cluster is considered to include interchangeable parts. FIG. 2 provides an overview of the operation of the part clustering component 114. As shown in FIG. 2, fitment data 202 for each fitment identified for each part item listing is hashed to provide a fitment hash for each fitment. Clustering is performed using the fitment hashes to generate a cluster 206 of part item listings for interchangeable parts.

For illustration purposes, FIG. 2 includes a simple example of part item listings being clustered together by this process. As shown in FIG. 2, the item data for the first part item listing includes fitment data 208 identifying four fitments (i.e., 2011 Chevrolet Equinox, 2012 Chevrolet Equinox, 2013 Chevrolet Equinox, 2014 Chevrolet Equinox). The item data for the second part item listing similarly includes fitment data 210 identifying four fitments (i.e., 2011 Chevrolet Equinox, 2012 Chevrolet Equinox, 2013 Chevrolet Equinox, 2014 Chevrolet Equinox). It should be understood that the type of fitment data shown in FIG. 2 is provided by way of example only and not limitation.

A first set of fitment hashes 212 is generated from the fitment data 208 for the first part item listing, and a second set of fitment hashes 214 is generated from the fitment data 210 for the second part item listing. In particular, a fitment hash is generated from fitment data for each fitment in each part item listing. Since the fitment data 208 for the first part item listing includes four fitments, four fitment hashes have been generated in the first set of fitment hashes 212. Similarly, since the fitment data 210 for the second part item listing includes four fitments, four fitment hashes have been generated in the second set of fitment hashes 214.

Based on the fitment match between the first set of fitment hashes 212 and the second set of fitment hashes 214, a cluster 216 is formed that includes the part item listings. In this example, there is an exact fitment match for the part item listings as the first set of fitment hashes 212 includes the same fitment hashes as the second set of fitment hashes 214. As can be seen from FIG. 2, the clustering provides a cluster 216 that includes the part item listings for part items with different brands and different MPNs.

With reference again to FIG. 1, the part clustering component 114 includes a fitment data module 120, a fitment hashing module 122, a clustering module 124, and an evaluation module 126. The fitment data module 120 accesses fitment data for part item listings available on the listing platform 104 and can perform pre-processing to prepare the fitment data for processing by the fitment hashing module 122. The fitment data can be retrieved, for instance, from the item listings data store 112. The fitment data for a part item listing provides information about the compatibility of a part item for the part item listing with one or more application. Each application with which a part item is compatible is considered a fitment for that part item. A part item listing can have fitment data for any number of fitments. For instance, in the context of an automobile part, the fitment data identifies which automobiles the automobile part is designed to fit and function properly with. Each unique automobile with which an automobile part is compatible with is considered to be a fitment for that automobile part. As such, a part item listing for an automobile part can include fitment data for any number of automobiles (i.e., fitments).

By way of example only and not limitation, the fitment data for a fitment for an automobile part can include any combination of the following: make (i.e., the brand or manufacturer of the vehicle, such as Toyota, Ford, BMW, etc.); model (i.e., specific model of the vehicle, such as Camry, F-150, 3 Series, etc.); year (i.e., the year of manufacture of the vehicle, such as 2010, 2015, 2020, etc.); trim (i.e., a specific version or variant of a vehicle model that typically distinguishes different levels of features, options, and configurations available for that model); and engine (i.e., engine specifications providing details about the engine, such as horsepower, torque, fuel type, and emission standards). In some configurations, the fitment data is based on a fitment graph that identifies relationships between various parts of the fitment data, such as, for instance, what makes go with which models, what trims go with which makes, etc.

In some aspects, additional data can be combined with the fitment data for each fitment. For instance, the additional data can include a category identifier that indicates a category of the part item, which can correspond to a category from a hierarchical taxonomy of categories for a listing platform. The additional data can also include price data for each part item listing, such as the listing price of the part item listing or a price range. The additional data can further include an inventory segment identifier for an inventory segment of the part item that generally identifies a source and/or condition of the part item part, such as a salvage part, original equipment part, an aftermarket part, or a private label part.

The fitment hashing module 122 generates a fitment hash of each fitment identified in the fitment data for each part item listing. In particular, the fitment hashing module 122 employs an algorithm that, when given fitment data for a given fitment of a part item listing, generates a fitment hash from the fitment data for that fitment. As used herein, the term "fitment hash" is used to refer to any transformed representation of fitment data for a fitment that provides a more compact representation of the fitment data to facilitate efficient comparison. For instance, a fitment hash can be a hash value, a fingerprint, a vector representation, an embedding, a compression-based representation, a dimensionally-reduced representation, and the like. The fitment hashing module 122 employs one or more algorithms or machine learning techniques to generate a fitment hash from fitment data for each fitment. For instance, the fitment hashing module 122 could use a hash function or an embedding model to generate the fitment hashes.

In some configurations, the fitment hashing module 122 generates the fitment hash for a fitment using only the fitment data for the fitment. In other configurations, the fitment hashing module 122 generates the fitment hash for a fitment using the fitment data for the fitment and additional data, such as a category identifier, price data, and/or an inventory segment identifier. In further configurations, a fitment hash generated from fitment data for a fitment can be paired with additional data (e.g., a category identifier, price data, an inventory segment identifier, etc.) for downstream clustering. Use of such additional data helps ensure the resulting clusters (from the clustering module 124 discussed below) include part item listings for interchangeable parts. For instance, it's possible that a first part item listing for one type of part item (e.g., brake pads) and a second part item listing for a second type of part item (e.g., fuel pump) have the same exact fitments. However, they are not interchangeable since they do not have the same function. As such, use of additional data such as category identifiers or price data (either as encoded as part of the fitment hashes or combined with the fitment hashes) can help ensure that part items that are not interchangeable are not clustered together.

The clustering module 124 forms clusters of part item listings based on fitment match between part item listings determined using the fitment hashes. Fitment match refers to the extent of overlap of fitment hashes between part item listings. In some aspects, the clustering module 124 forms clusters using exact fitment match in which all part item listings in a cluster have the exact same set of fitment matches (i.e., complete (100%) overlap of fitment matches). In other aspects, the clustering module uses a fitment match threshold that sets a threshold level of overlap of fitment hashes (i.e., below 100%) for clustering part item listings. For instance, a fitment match threshold of 80% could be used in which the clustering module 124 forms cluster with each cluster including part item listings have at least 80% of their fitment hashes overlapping with the fitment hashes of each other part item listing in the cluster. The clustering module 124 can employ any of a variety of clustering approaches to cluster part item listings based on their fitment hashes, such as, for instance, k-means clustering, DBSCAN (Density-Based Spatial Clustering of Applications with Noise), mean shift clustering, or agglomerative clustering, to name a few.

The goal of the clustering module 124 is to generate clusters in which each cluster includes part item listings for interchangeable parts that serve the same function and have the same fitments. While a cluster can include an individual part item listing, at least some of the clusters include multiple part item listings that are grouped together based on fitment match. In some aspects, as part of the clustering process, the clustering module 124 attempts to balance over-inclusivity and under-inclusivity. Over-inclusivity occurs when some clusters have part item listings that are not interchangeable parts. Under-inclusivity occurs when there are separate clusters for part item listings of interchangeable parts. For instance, using a configurable fitment match threshold is one way that the system can provide flexibility that allows finding a balance between over-inclusivity and under-inclusivity.

As noted above, in some configurations, additional data (e.g., category identifiers, price data, inventory segment identifier, etc.) can be provide as input with fitment data when generating fitment hashes. In such configurations, by being encoded in the fitment hashes, the additional data can facilitate forming clusters that accurately reflect part item listings for interchangeable parts. In other configurations, additional data can be used as one or more additional constraints that can be applied in addition to fitment match when generating clusters. This can include any number of positive constraints and/or any number of negative constraints. A positive constraint sets forth a rule dictating that part item listings are clustered together regardless of their fitment match when the rule is met. For instance, a positive constraint could dictate that part item listings are clustered together regardless of their fitment match if the rule of the positive constraint is met by the part items. Example rules of positive constraints include having the same brand, having the same MPN, having the same product identifier, or any combination thereof.

A negative constraint sets forth a rule dictating that part item listings are not clustered together regardless of their fitment match when the rule is met. For instance, a negative constraint could dictate that part item listings are not clustered together regardless of their fitment match if the rule of the negative constraint is met by the part items. By way of example only and not limitation, a negative constraint could be grouping based not only on fitment match but also based on category identifiers of the part item listings. Using category identifiers during clustering could address the situation in which part item listings for different types of parts have the same exact set of fitments but are not interchangeable parts since they provide different functions (e.g., brake pads and fuel pump having the same fitments are not interchangeable parts).

Price data is another piece of additional data that can be used during clustering. Similar to category identifiers, using price data helps to identify situations in which different types of parts have the same exact set of fitments but are not interchangeable parts and therefore should not be clustered together. For instance, in some cases, different types of parts can have not only the same fitments but also the same category identifier; but they are still not interchangeable parts since they provide different functions.

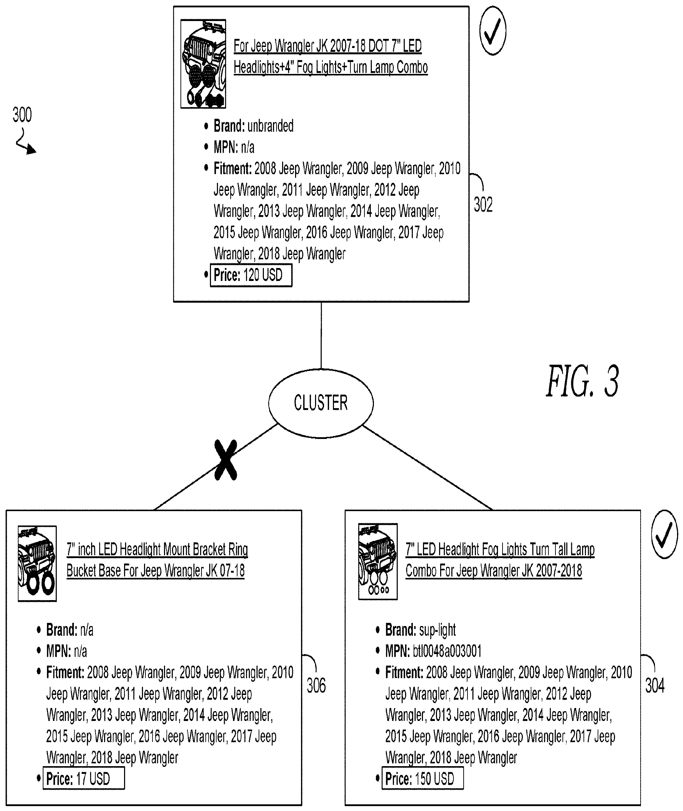

By way of example to illustrate, FIG. 3 shows part item listings 302, 304, 306 that would be grouped together based on fitment match since they have the exact same set of fitments. However, while the part item listing 302 and the part item listing 304 are for headlights; the part item listing 306 is for a headlight mount bracket ring. In some cases, the part item listings 302, 304, 306 could all be in the same leaf category so they have the same category identifier. As such, using fitment match and category identifier would not be sufficient to determine part item listing 306 is not an interchangeable part with the other part item listings 302, 304. In this case, price data is an additional piece of data that can be used to make this determination. In particular, the price (17 USD) of the part item listing 306 is significantly different from the price of the part item listing 302 and the part item listing 304 (120 USD and 150 USD, respectively). As such, the price data indicates that the part item listing 302 should not be clustered with the other part item listings 302, 304. Accordingly, some aspects employ price data in conjunction with fitment match when clustering part item listings. In such aspects, to be clustered together, part item listings must not only have a sufficient fitment match (e.g., 100% or some other fitment match threshold), but the part item listings must have sufficiently similar prices as determined using one or more clustering techniques.

In some aspects, the clustering module 124 employs price data to perform price outlier detection on clusters to remove part item listings that are price outliers. In such configurations, given a cluster of part item listings based on fitment match, the clustering module 124 accesses price data for each part item listing and determines whether the price of any part item listing in the cluster is an outlier from the prices of other part item listings in the cluster. Any price outliers identified in the cluster are removed from the cluster. This addresses situations in which a part item listing can appear to be an interchangeable part based on fitment match (and category, in some aspects), but is not an interchangeable part. As such, the clustering module 124 can employ price outlier detection to identify such part item listings in clusters and remove them.

While price outliers can be identified using a variety of different approaches, in some configurations, the clustering module 124 identifies any price outliers in a cluster based on the median price for the cluster. For instance, given the price data for part item listings in a cluster, the median price, *X̅* = median (X), and the median absolute deviation, MAD = median (|X*ᵢ - X̅*|)*,* are computed for the cluster. A lower bound, *X̅* - k*MAD, and/or an upper bound, *X̅* + k*MAD, are determined, where k is a hyper-parameter that can be configured, for instance, based on precision, coverage, and/or recall. Any part item listing having a price outside of the lower bound and/or upper bound is identified as a price outlier and removed from the cluster.

Cluster data is stored for the clusters formed by the clustering module 124. The cluster data generally includes information identifying which part item listings are clustered together, such that the part item listings in the same cluster can be considered interchangeable parts. For instance, the cluster data for each cluster can include a cluster identifier identifying the cluster and a part item listing identifier for each part item listing in the cluster. The cluster data can be stored, for instance, in the item listings data store 112 or another storage location that is accessible to the item retrieval system 106 for performing item retrieval tasks.

The evaluation module 126 evaluates the performance of the clustering module 124 in generating clusters that accurately capture interchangeable parts and also provides for updating aspects to improve accuracy. The evaluation module 126 facilitates assessment of clusters by evaluators. This could include providing clusters of part item listings to evaluators who identify each part item listing as belonging or not belonging to each cluster. The evaluators can also assess whether there are instances in which separate clusters include the same interchangeable part. Based on the evaluator input, the evaluation module 126 determines the accuracy of the clustering module 124 for both over-inclusivity (i.e., clusters including incompatible parts) and under-inclusivity (i.e., multiple clusters for the same interchangeable part). The accuracy can then be used to update parameters of the clustering module 124 in forming clusters. For instance, the fitment match threshold can be adjusted to address over-inclusivity (e.g., increasing the fitment match threshold) and under-inclusivity (e.g., decreasing the fitment match threshold). Additionally, aspects of the price outlier detection can be adjusted, such as a coefficient used to determine a distance from a mean price for identifying price outliers.

The item retrieval component 116 of the item retrieval system 106 leverages cluster data to select item listings for part items for item retrieval tasks, such as search and recommendation. Given an input (e.g., a search query in the context of search or a seed item in the context of recommendation), the item retrieval component 116 identifies a cluster relevant to the input. The item retrieval component 116 then returns one or more of the part item listings based on the identified cluster (e.g., as search results or recommendations) in response to the input.

In the context of search, when a search query is received from a user device, such as the user device 102, the item retrieval component 116 uses the cluster data to select and return search results in response to the search query. In particular, the item retrieval component 116 identifies a cluster relevant to the search query and provides search results based on that identified cluster.

A relevant cluster for a search query can be identified in a number of different manners. For instance, in some cases, the search query can comprise a part number, such as an MPN. In such cases, a cluster that includes part item listings with that part number is identified. For instance, a mapping between part numbers and cluster identifiers could be stored and used to identify clusters for search queries with part numbers.

In other cases, preliminary search results for a search query can be identified, and a cluster could be identified based on part item listings included in those preliminary search results. This could include identifying the cluster for each part item listing included in the initial search results (e.g., using a mapping between item identifiers and cluster identifiers) and selecting a cluster that corresponds with a threshold percentage of the initial search results. In some cases, this could be based on only the first N part item listings in the preliminary search results (e.g., based on ranking of the preliminary search results). This allows for identification of part item listings from a cluster that were not identified in the preliminary search results.

Search results based on an identified cluster can be returned to a user device in a number of different manners. In some cases, a search result page is provided to the user device that presents a list of search results that include part item listings in the cluster. In other instances, a search result page is provided that includes a primary set of search results, and an option to expand the search to include part item listings from the cluster. For instance, in the case in which the user query includes a part number (e.g., an MPN), the search page could provide search results for part item listings that include the part number and a selectable option to view other part item listings that are considered to be interchangeable parts. If the user selects the option, part item listings from the cluster that do not have the part number in the search query are then provided for presentation. In still further aspects, a search result page could be provided that separates search results. For instance, in response to a search query with a part number (e.g., an MPN), a search results page could be provided that includes a first section with part item listings having the part number and a second section with part item listings from the cluster for that part number that do not have that same part number. In some cases, whether to include search results for part item listings from a cluster can be based on the number of search results identified for the search query not satisfying a threshold. For instance, if the search results include a low number (i.e., a number of search results below a threshold number) or null set, the set of search results can be supplemented with part item listings from the cluster.

In the context of recommendation, the item retrieval component 116 can use cluster data to select part item listings to recommend. This could be based on one or more seed items, such as a part item listing that a user is currently viewing or has previously viewed. The item retrieval component 116 identifies a cluster relevant to the seed item(s), and provides one or more recommended part item listings from that cluster. By way of example to illustrate, suppose a user selects to view an item listing page for a particular part item listing. In that case, the item retrieval component 116 can identify a cluster to which that part item listing belongs (e.g., based on a mapping between item identifiers and cluster identifiers). The item retrieval component 116 can then select one or more part item listings from the identified cluster to provide as recommendation(s) for presentation on the item listing page.

The item retrieval system 106 further includes a user interface component 118 that provides one or more user interfaces for interacting with the listing platform 104 and/or the item retrieval system 106. While shown as part of the item retrieval system 106 in FIG. 1, in some configurations, the user interface component 118 can be part of the listing platform 104. The user interface component 118 provides one or more user interfaces to a user device, such as the user device 102. In some instances, the user interfaces can be presented on the user device 102 via the application 108, which can be a web browser or a dedicated application for interacting with the listing platform 104 and/or the item retrieval system 106. For instance, the user interface component 118 can provide user interfaces for, among other things, allowing users to enter search queries or otherwise navigate the listing platform 104. The user interfaces can further provide search results and/or recommendations identifying part item listings selected by the item retrieval system 106 using cluster data as described herein.

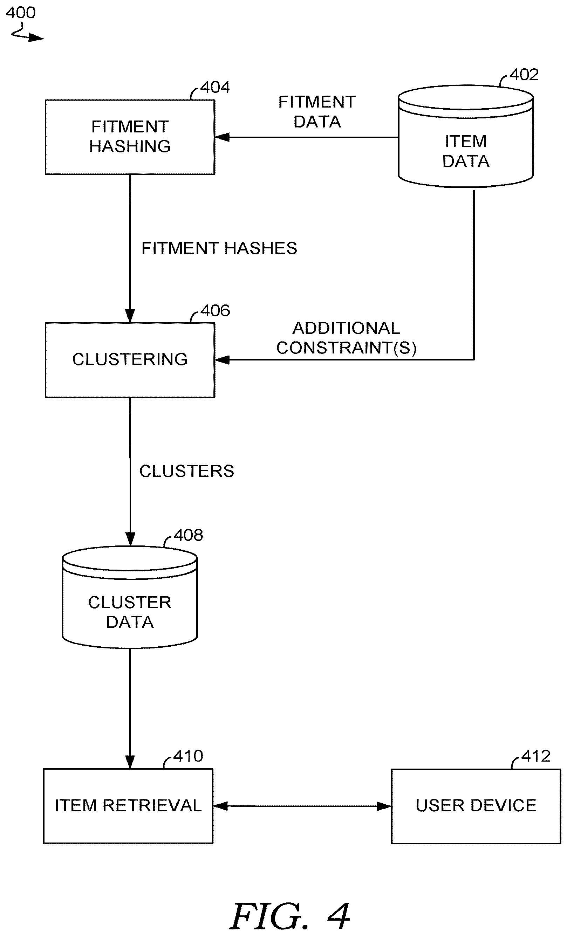

Turning next to FIG. 4, a block diagram is provided showing operations 400 for employing fitment match to generate clusters of part item listings for item retrieval in accordance with some specific aspects of the present technology. As shown in FIG. 4, fitment data is accessed from an item data store 402 (which can correspond to the item listings data store 112 of FIG. 1). More particularly, fitment data is accessed for each fitment of each of a number of part item listings on a listing platform (such as the listing platform 104 of FIG. 1). The fitment data for each fitment of a part item listing comprises information identifying an application with which the part item is compatible. For instance, in the context of automobiles, the fitment data for a fitment of an automobile part could be the year, make, model, trim, and/or engine of an automobile with which the automobile part is compatible. Each part item listing can have fitment data for any number of fitments. For each part item listing, a fitment hashing operation 404 is performed on the fitment data for each fitment to provide a set of fitment hashes that includes a fitment hash for each fitment of the part item listing.

A clustering operation 406 is performed using the fitment hashes to cluster the part item listings based on at least fitment match. The clustering operation 406 forms clusters of part item listings for interchangeable parts. As described herein, fitment match represents an overlap of fitment hashes between part item listings. The fitment match used by the clustering operation 406 can require an exact match or an extent of overlap meeting a configurable fitment match threshold less than 100%.

In some aspects, such as that shown in FIG. 4, the clustering operation 406 can use one or more additional constraints in addition to fitment match when clustering part item listings. This can include, for instance, forming clusters based on additional information, such as category identifiers and/or price data for each part item listing. While FIG. 4 illustrates a configuration in which additional constraints are considered by the clustering operation 406 in addition to fitment match, in some configurations, additional data (e.g., category identifier, price data, etc.) can be used in conjunction with fitment data when generating the fitment hashes such that the additional data is encoded in the fitment hashes.

Based on the clusters provided by the clustering operation 406, cluster data is stored in a cluster data store 408. The cluster data generally identifies part item listings that have been clustered together as interchangeable parts. An item retrieval operation 410 uses cluster data in the cluster data store 408 to facilitate item retrieval for a user device 412. For instance, in the context of search, given a search query, a relevant cluster is identified and search results provided based on part item listings in the identified cluster. In the context of recommendation, given one or more seed items, a relevant cluster is identified and recommendations provided based on part item listings in the identified cluster.

### Example Methods for Enhanced Item Retrieval based on Fitment Match

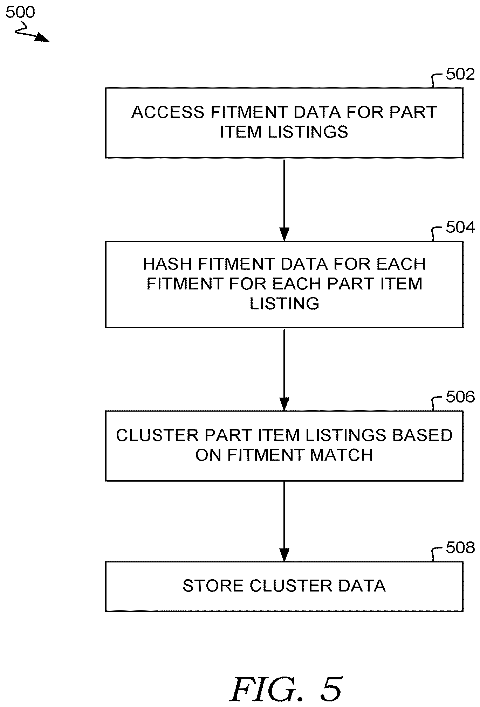

With reference now to FIG. 5, a flow diagram is provided that illustrates a method 500 for generating clusters of part item listings based on fitment match and storing cluster data in accordance with some aspects. The method 500 may be performed at least in part, for instance, by the part clustering component 114 of FIG. 1. Each block of the method 500 and any other methods described herein comprises a computing process performed using any combination of hardware, firmware, and/or software. For instance, various functions can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few.

As shown at block 502, fitment data for fitments of part item listings on a listing platform is accessed. Each fitment for a part item listing is an application (e.g., an automobile) with which the part item of that part item listing is compatible. The fitment data for a fitment comprises information that identifies the specific application (e.g., a year/make/model of an automobile; or a serial number of a printer). Each part item listing can have fitment data for any number of fitments.

The fitment data for each fitment of each part item listing is hashed at block 504. This provides a set of fitment hashes for each part item listing. The set of fitment hashes for each part item listing includes a fitment hash for each fitment of the part item listing. In some aspects, the fitment hashes can be generated from fitment data alone, while in other aspects, the fitment hashes can be generated using fitment data with additional data, such as a category identifier, price information, and/or an inventory segment identifier.

As shown at block 506, part item listings are clustered based on fitment match using their corresponding fitment hashes. As described herein, fitment match comprises an extent of overlap between fitment hashes of part item listings. In some instances, part item listings are clustered together only if they have an exact fitment match (e.g., 100% overlap of fitment hashes). In other instances, part item listings are clustered together if they have a fitment match meeting a fitment match threshold (e.g., a percentage overlap of fitment hashes). A variety of different clustering techniques can be employed, such as, for instance, k-means clustering, DBSCAN (Density-Based Spatial Clustering of Applications with Noise), mean shift clustering, or agglomerative clustering. In some configurations, additional data, such as category identifiers, price data, and/or inventory segment identifiers, can be used in addition to fitment match to form clusters.

Cluster data is stored (e.g., in computer storage media), as shown at block 508. This can include assigning a cluster identifier to each cluster and storing the cluster identifier in association with various information. For instance, the cluster identifier for each cluster can be stored in association with item identifiers for part item listings in the cluster.

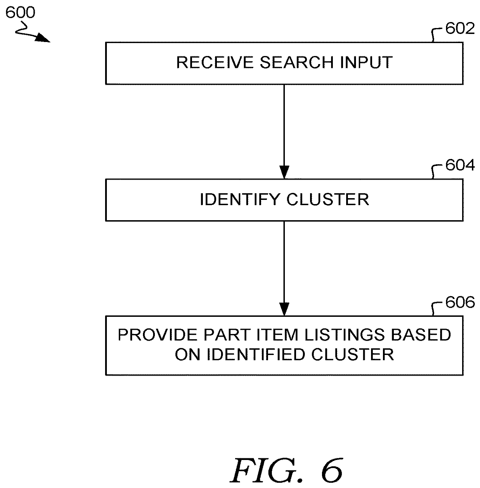

Turning next to FIG. 6, a flow diagram is provided showing a method 600 for performing item retrieval using cluster data for part item listings generated based on fitment match. The method 600 can be performed at least in part, for instance, by the item retrieval component 116 of FIG. 1. As shown at block 602, an input is received. For instance, in the context of search, the input can comprise a search query. In some aspects, a search query can identifier a part number, such as an MPN. In the context of recommendation, the input can comprise one or more seed items.

As shown at block 604, a cluster is identified based on the input. The cluster can be identified from cluster data, where the cluster data was generated based on fitment match using fitment hashes in accordance with the technology described here (e.g., via the method 500). A cluster can be identified in a number of different ways. For instance, in the case of a search query having a part number, a cluster having part item listings with that part number is identified. In some aspects, initial search results for the search query are identified, and a cluster is identified based on the part item listings in the initial search results. In some aspects, this may consider only the first N part item listings in the initial search results. In the context of recommendation, in some aspects, a cluster is identified based on one or more seed items. For instance, given a seed item that comprises a part item listing, a cluster to which that part item listing is identified.

One or more part item listings are provided in response to the input based on the identified cluster, as shown at block 606. For instance, in the context of search, a search results page can be provided that includes part item listings from the identified cluster. In the context of recommendation, one or more recommendations can be provided for part item listings from the identified cluster.

### Exemplary Operating Environment

Having described implementations of the present disclosure, an exemplary operating environment in which embodiments of the present technology may be implemented is described below in order to provide a general context for various aspects of the present disclosure. Referring initially to FIG. 7 in particular, an exemplary operating environment for implementing embodiments of the present technology is shown and designated generally as computing device 700. Computing device 700 is but one example of a suitable computing environment and is not intended to suggest any limitation as to the scope of use or functionality of the technology. Neither should the computing device 700 be interpreted as having any dependency or requirement relating to any one or combination of components illustrated.

The technology may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 7, computing device 700 includes bus 710 that directly or indirectly couples the following devices: memory 712, one or more processors 714, one or more presentation components 716, input/output (I/O) ports 718, input/output components 720, and illustrative power supply 722. Bus 710 represents what may be one or more busses (such as an address bus, data bus, or combination thereof). Although the various blocks of FIG. 7 are shown with lines for the sake of clarity, in reality, delineating various components is not so clear, and metaphorically, the lines would more accurately be grey and fuzzy. For example, one may consider a presentation component such as a display device to be an I/O component. Also, processors have memory. The inventors recognize that such is the nature of the art, and reiterate that the diagram of FIG. 7 is merely illustrative of an exemplary computing device that can be used in connection with one or more embodiments of the present technology. Distinction is not made between such categories as "workstation," "server," "laptop," "hand-held device," etc., as all are contemplated within the scope of FIG. 7 and reference to "computing device."

Computing device 700 typically includes a variety of computer-readable media. Computer-readable media can be any available media that can be accessed by computing device 700 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data.

Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 700. The terms "computer storage media" and "computer storage medium" do not comprise signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 712 includes computer storage media in the form of volatile and/or nonvolatile memory. The memory may be removable, non-removable, or a combination thereof. Exemplary hardware devices include solid-state memory, hard drives, optical-disc drives, etc. Computing device 700 includes one or more processors that read data from various entities such as memory 712 or I/O components 720. Presentation component(s) 716 present data indications to a user or other device. Exemplary presentation components include a display device, speaker, printing component, vibrating component, etc.

I/O ports 718 allow computing device 700 to be logically coupled to other devices including I/O components 720, some of which may be built in. Illustrative components include a microphone, joystick, game pad, satellite dish, scanner, printer, wireless device, etc. The I/O components 720 may provide a natural user interface (NUI) that processes air gestures, voice, or other physiological inputs generated by a user. In some instance, inputs may be transmitted to an appropriate network element for further processing. A NUI may implement any combination of speech recognition, touch and stylus recognition, facial recognition, biometric recognition, gesture recognition both on screen and adjacent to the screen, air gestures, head and eye-tracking, and touch recognition associated with displays on the computing device 700. The computing device 700 may be equipped with depth cameras, such as, stereoscopic camera systems, infrared camera systems, RGB camera systems, and combinations of these for gesture detection and recognition. Additionally, the computing device 700 may be equipped with accelerometers or gyroscopes that enable detection of motion.

The present technology has been described in relation to particular embodiments, which are intended in all respects to be illustrative rather than restrictive. Alternative embodiments will become apparent to those of ordinary skill in the art to which the present technology pertains without departing from its scope.

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described herein may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technology are described with reference to a distributed computing environment; however, the distributed computing environment depicted herein is merely exemplary. Components can be configured for performing novel embodiments of embodiments, where the term "configured for" can refer to "programmed to" perform particular tasks or implement particular abstract data types using code. Further, while embodiments of the present technology may generally refer to the technical solution environment and the schematics described herein, it is understood that the techniques described may be extended to other implementation contexts.

From the foregoing, it will be seen that this technology is one well adapted to attain all the ends and objects set forth above, together with other advantages which are obvious and inherent to the system and method. It will be understood that certain features and subcombinations are of utility and may be employed without reference to other features and subcombinations. This is contemplated by and is within the scope of the claims.

The present disclosure relates further to one or more of the following aspects:
1. One or more computer storage media storing computer-useable instructions that, when used by one or more computing devices, cause the one or more computing devices to perform operations, the operations comprising:
   accessing item data for each of a plurality of part item listings, the item data for each part item listing comprising fitment data for each of a plurality of fitments;
   for each part item listing, generating a fitment hash using the fitment data for each fitment to provide a plurality of fitment hashes;
   clustering the plurality of part item listings based on overlap of fitment hashes to provide a plurality of part item listing clusters; and
   storing cluster data for the plurality of part item listing clusters, the cluster data for a first part item listing cluster comprising a first cluster identifier and an item listing identifier for each part item listing in the first part item listing cluster.
2. The one or more computer storage media of aspect 1, wherein a first fitment data for a first fitment of a first part item listing for a first part comprises data identifying a first automobile with which the first part is compatible, the data identifying the first automobile indicating one or more selected from the following: a year, a make, a model, a trim, and an engine; and/or wherein a first fitment hash for a first fitment of a first part item listing is generated using a first fitment data for the first fitment and additional data for the first part item listing, the additional data comprising one or more selected from the following: a category identifier, price data, and an inventory segment identifier.
3. The one or more computer storage media of aspect 1 or 2, wherein each part item listing cluster includes a subset of part item listings having a threshold overlap of fitment hashes.
4. The one or more computer storage media of aspect 3, wherein the threshold overlap comprises a complete overlap of fitment hashes.
5. The one or more computer storage media of any one of the preceding aspects, wherein the plurality of part item listings are also clustered based on additional data for each part item listing, the additional data for each part item listing used to cluster the plurality of part item listings comprises one or more selected from the following: a category identifier, price data, and an inventory segment identifier.
6. The one or more computer storage media of any one of the preceding aspects, wherein the operations further comprise:
   receiving a search query;
   identifying, from the plurality of part item listing clusters, the first part item listing cluster based on the search query; and
   providing one or more search results based on the cluster data for the first part item listing cluster.
7. The one or more computer storage media of aspect 6, wherein the search query comprises a part number, and wherein the first part item listing cluster is identified based on having an item listing identifier for a part item listing having the part number; and/or
   wherein identifying the first part item listing cluster based on the search query comprises:
   performing a search on an item listings data store using the search query to identify a set of preliminary results; and
   identifying the first part item listing cluster based on the set of preliminary results, wherein providing the one or more search results based on the cluster data for the first part item listing cluster comprises generating a result set that includes one or more part item listings from the first part item listing cluster that were not included in the set of preliminary results.
8. The one or more computer storage media of any one of the preceding claims, wherein the operations further comprise:
   receiving a seed item;
   identifying, from the plurality of part item listing clusters, a first part item listing cluster based on the seed item; and
   providing one or more part item recommendations based on cluster data for the first part item listing cluster.
9. A computer-implemented method comprising:
   generating a first set of fitment hashes for a first part item listing, the first set of fitment hashes including a fitment hash for each fitment of the first part item listing;
   generating a second set of fitment hashes for a second part item listing, the second set of fitment hashes including a fitment hash for each fitment of the second part item listing;
   clustering the first part item listing and the second part item listing based on a fitment match between the first set of fitment hashes and the second set of fitment hashes; and
   storing cluster data comprising a cluster identifier and a first item listing identifier for the first part item listing and a second item listing identifier for the second part item listing.
10. The computer-implemented method of aspect 9, wherein a first fitment hash for a first fitment of the first part item listing is generated using a first fitment data for the first fitment of the first part item listing, wherein the first fitment data comprises data identifying a first automobile with which a first part of the first part item listing is compatible, the data identifying the first automobile indicating one or more selected from the following: a year, a make, a model, a trim, and an engine; and/or wherein a first fitment hash for a first fitment of the first part item listing is generated using a first fitment data for the first fitment and additional data for the first part item listing, the additional data comprising one or more selected from the following: a category identifier, price data, and an inventory segment identifier.
11. The computer-implemented method of aspect 9 or 10, wherein the fitment match between the first set of fitment hashes and the second set of fitment hashes comprises a complete overlap of fitment hashes; and/or wherein the fitment match between the first set of fitment hashes and the second set of fitment hashes comprises a threshold overlap of fitment hashes.
12. The computer-implemented method of any one of aspects 9 to 11, wherein the first part item listing and the second part item listing are also clustered based on additional data for the first part item listing and the second part item listing, the additional data comprising one or more selected from the following: a category identifier, price data, and an inventory segment identifier.
13. The computer-implemented method of any one of aspects 9 to 12, wherein the method further comprises:
   receiving an input for item retrieval;
   identifying the cluster data based on the input; and
   providing an indication of one or more part item listings identified from the cluster data as a response to the input.
14. A computer system comprising:
   one or more processors; and
   one or more computer storage media storing computer-useable instructions that, when used by the one or more processors, cause the computer system to perform operations, the operations comprising:
      accessing fitment data for each fitment of each part item listing from a plurality of part item listings on a listing platform,
      generating a set of one or more fitment hashes for each part item listing using the fitment data for each fitment of each part item listing;
      clustering the part item listings based on overlap of fitment hashes for each part item listing to provide a plurality of part item listing clusters;
      storing cluster data identifying each part item listing in each part item listing cluster;
      receiving input for item retrieval;
      identifying a first part item listing cluster from the plurality of part item listing clusters based on the input for item retrieval; and
      providing an indication of one or more part item listings identified by a first cluster data for the first part item listing cluster.
15. The computer system of aspect 14, wherein the part item listings are also clustered based on additional data; and wherein optionally the additional data comprises one or more selected from the following: category identifiers, price data, and inventory segment identifiers.
16. One or more computer storage media storing computer-useable instructions that, when used by one or more computing devices, cause the one or more computing devices to perform the method according to any one of aspects 9 to 13.

## Claims

1. One or more computer storage media storing computer-useable instructions that, when used by one or more computing devices, cause the one or more computing devices to perform operations, the operations comprising:
accessing item data for each of a plurality of part item listings, the item data for each part item listing comprising fitment data for each of a plurality of fitments;
for each part item listing, generating a fitment hash using the fitment data for each fitment to provide a plurality of fitment hashes;
clustering the plurality of part item listings based on overlap of fitment hashes to provide a plurality of part item listing clusters; and
storing cluster data for the plurality of part item listing clusters, the cluster data for a first part item listing cluster comprising a first cluster identifier and an item listing identifier for each part item listing in the first part item listing cluster.

2. The one or more computer storage media of claim 1,
wherein a first fitment data for a first fitment of a first part item listing for a first part comprises data identifying a first automobile with which the first part is compatible, the data identifying the first automobile indicating one or more selected from the following: a year, a make, a model, a trim, and an engine; and/or
wherein a first fitment hash for a first fitment of a first part item listing is generated using a first fitment data for the first fitment and additional data for the first part item listing, the additional data comprising one or more selected from the following: a category identifier, price data, and an inventory segment identifier.

3. The one or more computer storage media of claim 1 or 2, wherein each part item listing cluster includes a subset of part item listings having a threshold overlap of fitment hashes.

4. The one or more computer storage media of claim 3, wherein the threshold overlap comprises a complete overlap of fitment hashes.

5. The one or more computer storage media of any one of the preceding claims, wherein the plurality of part item listings are also clustered based on additional data for each part item listing, the additional data for each part item listing used to cluster the plurality of part item listings comprises one or more selected from the following: a category identifier, price data, and an inventory segment identifier.

6. The one or more computer storage media of any one of the preceding claims, wherein the operations further comprise:
receiving a search query;
identifying, from the plurality of part item listing clusters, the first part item listing cluster based on the search query; and
providing one or more search results based on the cluster data for the first part item listing cluster.

7. The one or more computer storage media of claim 6, wherein the search query comprises a part number, and wherein the first part item listing cluster is identified based on having an item listing identifier for a part item listing having the part number; and/or
wherein identifying the first part item listing cluster based on the search query comprises:
performing a search on an item listings data store using the search query to identify a set of preliminary results; and
identifying the first part item listing cluster based on the set of preliminary results, wherein providing the one or more search results based on the cluster data for the first part item listing cluster comprises generating a result set that includes one or more part item listings from the first part item listing cluster that were not included in the set of preliminary results.

8. The one or more computer storage media of any one of the preceding claims, wherein the operations further comprise:
receiving a seed item;
identifying, from the plurality of part item listing clusters, a first part item listing cluster based on the seed item; and
providing one or more part item recommendations based on cluster data for the first part item listing cluster.

9. A computer-implemented method comprising:
generating a first set of fitment hashes for a first part item listing, the first set of fitment hashes including a fitment hash for each fitment of the first part item listing;
generating a second set of fitment hashes for a second part item listing, the second set of fitment hashes including a fitment hash for each fitment of the second part item listing;
clustering the first part item listing and the second part item listing based on a fitment match between the first set of fitment hashes and the second set of fitment hashes; and
storing cluster data comprising a cluster identifier and a first item listing identifier for the first part item listing and a second item listing identifier for the second part item listing.

10. The computer-implemented method of claim 9,
wherein a first fitment hash for a first fitment of the first part item listing is generated using a first fitment data for the first fitment of the first part item listing, wherein the first fitment data comprises data identifying a first automobile with which a first part of the first part item listing is compatible, the data identifying the first automobile indicating one or more selected from the following: a year, a make, a model, a trim, and an engine; and/or
wherein a first fitment hash for a first fitment of the first part item listing is generated using a first fitment data for the first fitment and additional data for the first part item listing, the additional data comprising one or more selected from the following: a category identifier, price data, and an inventory segment identifier.

11. The computer-implemented method of claim 9 or 10, wherein the fitment match between the first set of fitment hashes and the second set of fitment hashes comprises a complete overlap of fitment hashes; and/or
wherein the fitment match between the first set of fitment hashes and the second set of fitment hashes comprises a threshold overlap of fitment hashes.

12. The computer-implemented method of any one of claims 9 to 11, wherein the first part item listing and the second part item listing are also clustered based on additional data for the first part item listing and the second part item listing, the additional data comprising one or more selected from the following: a category identifier, price data, and an inventory segment identifier.

13. The computer-implemented method of any one of claims 9 to 12, wherein the method further comprises:
receiving an input for item retrieval;
identifying the cluster data based on the input; and
providing an indication of one or more part item listings identified from the cluster data as a response to the input.

14. A computer system comprising:
one or more processors; and
one or more computer storage media storing computer-useable instructions that, when used by the one or more processors, cause the computer system to perform operations, the operations comprising:
accessing fitment data for each fitment of each part item listing from a plurality of part item listings on a listing platform,
generating a set of one or more fitment hashes for each part item listing using the fitment data for each fitment of each part item listing;
clustering the part item listings based on overlap of fitment hashes for each part item listing to provide a plurality of part item listing clusters;
storing cluster data identifying each part item listing in each part item listing cluster;
receiving input for item retrieval;
identifying a first part item listing cluster from the plurality of part item listing clusters based on the input for item retrieval; and
providing an indication of one or more part item listings identified by a first cluster data for the first part item listing cluster.

15. The computer system of claim 14, wherein the part item listings are also clustered based on additional data; and wherein optionally the additional data comprises one or more selected from the following: category identifiers, price data, and inventory segment identifiers.
